# FASCICULE DE BREVET EUROPEEN

(11) **EP 2 897 789 B1**
(45) Date de publication et mention de la délivrance du brevet: **02.09.2020**
(21) Numéro de dépôt: 13765351.5
(22) Date de dépôt: 18.09.2013
(51) Int. Cl.: B29C 73/16, B29C 37/00, B29D 30/06

(54) **PROCÉDÉ POUR APPLIQUER DES PARTICULES SUR LA PAROI INTÉRIEURE D'UN PNEUMATIQUE**
VERFAHREN ZUM AUFBRINGEN VON PARTIKELN AUF DIE INNENSEITE EINES REIFEN
METHOD OF APPLYING PARTICLES ON THE INTERNAL WALL OF A TIRE

(30) Priorité: 24.09.2012 FR 1258923; 05.12.2012 FR 1261633
(43) Date de publication de la demande: 29.07.2015
(73) Titulaire: Compagnie Générale des Etablissements Michelin, 63000 Clermont-Ferrand (FR)
(72) Inventeur: LE DOUCEN, Jacques, F-63040 Clermont-Ferrand Cedex 9 (FR)
(74) Mandataire: Bauvir, Jacques
(86) Numéro de dépôt international: PCT/EP2013/069336
(87) Numéro de publication internationale: WO 2014/044696

(56) Documents cités:
- EP-A1- 2 042 296
- WO-A1-2009/053352
- WO-A1-2011/073171
- JP-A- 2004 082 387
- US-A- 4 957 573
- US-A- 5 085 942
- DATABASE WPI Week 198449 Thomson Scientific, London, GB; AN 1984-303129 XP002695343, -& JP 59 187833 A (BRIDGESTONE TIRE KK) 25 octobre 1984 (1984-10-25)

## Description

L'invention concerne un procédé pour appliquer des particules sur la paroi intérieure d'un pneumatique comprenant au moins une couche de composition auto-obturante.

Pour protéger le pneumatique contre toute perforation provoquée par la pénétration partielle ou totale d'objets extérieurs, une couche de composition auto-obturante est appliquée sur au moins une partie de la paroi interne du pneumatique.

Mais cette couche de composition auto-obturante, appliquée sur le pneumatique après sa cuisson, présente la propriété d'être particulièrement collante.

Cet aspect collant entraîne assez souvent une gêne lors du transport et du stockage des pneumatiques. En effet, lors de ces étapes, les pneumatiques sont disposés de manière alignée les uns à côté des autres ou imbriqués en chaîne et, sont ensuite comprimés entre eux.

Lors de cette compression, certaines des parties constituant le pneumatique, à savoir les flancs et le sommet, se retrouvent serrés les unes contre les autres, et par conséquent collées les unes aux autres avec l'impossibilité de les décoller sans endommager, voire détruire, la structure architecturelle du pneumatique.

Aussi, il subsiste le besoin de pouvoir toujours poursuivre l'application de cette couche de composition auto-obturante protectrice sur tout ou partie de la paroi interne des pneumatiques, tout en pouvant ensuite les transporter et les stocker, sans que certaines de leurs parties constituantes n'adhèrent entre elles.

Des procédés et des pneumatiques sont connus des documents JP59187833, WO2011/073171, US5085942, EP2042296 et US4957573 de l'état de la technique

L'invention a donc pour objet un procédé pour appliquer des particules sur la paroi intérieure d'un pneumatique comportant deux flancs, un sommet pourvu radialement extérieurement d'une bande de roulement, une structure de renfort de type carcasse, au moins une armature de sommet, la surface interne des flancs et du sommet formant une paroi intérieure, au moins une partie de ladite paroi intérieure étant recouverte d'au moins une couche de composition auto-obturante. L'invention se caractérise en ce que les particules sont appliquées après la cuisson du pneumatique sur la couche de composition auto-obturante par une technique de flocage et en ce que les particules comprennent des broyats de pneumatiques usagés ou issus de rebut de fabrication.

Il est par ailleurs déjà connu du document JP2004-082387A l'application d'une pluralité de fibres courtes sur la surface intérieure d'un pneumatique dans le but de diminuer l'intensité du bruit ressenti à l'intérieur du véhicule. Cette application des fibres s'effectue sur une composition adhésive préalablement appliquée sur ladite surface intérieure du pnematique. La composition adhésive et les fibres courtes sont toutes les deux appliquées avant la cuisson du pneumatique, donc sur un pneumatique cru.

Contrairement à JP2004-082387A, la couche de particules, présente sur le pneumatique selon l'invention, est appliquée après l'étape de cuisson du pneumatique, et, par conséquent, sur un pneumatique cuit. Ceci permet ainsi de garantir et conserver une bonne qualité de l'application des particules et de leur rendu visuel ultérieur. En effet, appliquées sur un pneumatique déjà cuit, les particules ne subissent par conséquent pas de dégradations du fait de la montée en température et en pression dans la presse de cuisson.

Le procédé, tel que défini selon l'invention, permet l'obtention d'un pneumatique présentant ainsi l'avantage de conserver sa structure architecturelle parfaitement intacte, et par conséquent toutes ses performances techniques, une fois monté sur jante, dans la mesure, où l'ajout de ces particules ne gêne en aucune manière le bon fonctionnement ultérieur du pneumatique en roulage, ni n'influence l'efficacité de la couche de composition auto-obturante.

La technique de flocage s'effectue de préférence par projection sous pression.

De préférence, la forme des particules peut être définie par le rapport L/E supérieur à 3, où L représente la longueur ou plus grande dimension de la particule et E représente l'épaisseur moyenne de la particule. Le rapport L/E est plus préférentiellement supérieur à 5.

De préférence, les particules ont un diamètre moyen compris entre 0,2 et 5mm. Les particules peuvent présenter une forme géométrique quelconque.

De manière préférée, les particules ont une couleur monochromatique ou polychromatique. La présence de particules colorées sur la paroi intérieure d'un pneumatique permet en outre de le distinguer d'un pneumatique non traité par le procédé de l'invention.

Les particules comprennent des fibres choisies parmi les fibres synthétiques organiques, les fibres synthétiques minérales, les fibres synthétiques, les fibres naturelles.

Parmi les fibres synthétiques organiques sont comprises les polyoléfines, les polyamides aliphatiques, les polyamides aromatiques, les polyesters. Parmi les fibres synthétiques minérales sont comprises les fibres de carbones les fibres de verre, les fibres de polyester. Parmi les fibres naturelles sont comprises les fibres de coton, les fibres de soie, les fibres de laine, les fibres de cellulose.

Les particules peuvent être choisies parmi les broyats de pneumatique qui présentent de préférence une taille allant d'environ 1µm à 5mm. Les broyats peuvent comprendre des fils de renforcement. Ces fils se définissent comme étant tout élément longiforme de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé ou ondulé.

Ce fil de renforcement peut prendre toute forme connue, il peut s'agir par exemple d'un monofilament élémentaire de diamètre important (par exemple et de préférence égal ou supérieure à 50µm), d'un ruban élémentaire, d'une fibre multifilamentaire (constituée d'une pluralité de filaments élémentaires de faible diamètre, typiquement inférieur à 30µm), d'un retors textile formé de plusieurs fibres retordues ensemble, d'un câble textile formé de plusieurs fibres ou monofilaments câblés ou retordus ensemble, ou encore d'un assemblage, une rangée de fils tels que par exemple une bande ou bandelette comportant plusieurs de ces monofilaments, fibres, retors ou câbles regroupés ensemble, par exemple alignés selon une direction principale, rectiligne ou pas.

Parmi les fibres synthétiques organiques sont comprises les polyoléfines, les polyamides aliphatiques, les polyamides aromatiques, les polyesters. Parmi les fibres synthétiques minérales sont comprises les fibres de carbones les fibres de verre, les fibres de polyester. Parmi les fibres naturelles sont comprises les fibres de coton, les fibres de soie, les fibres de laine, les fibres de cellulose.

Les particules présentent de préférence une épaisseur moyenne comprise entre 0,1 et 0,5mm, et peuvent recouvrir entre 60% et 95% de la paroi intérieure du pneumatique.

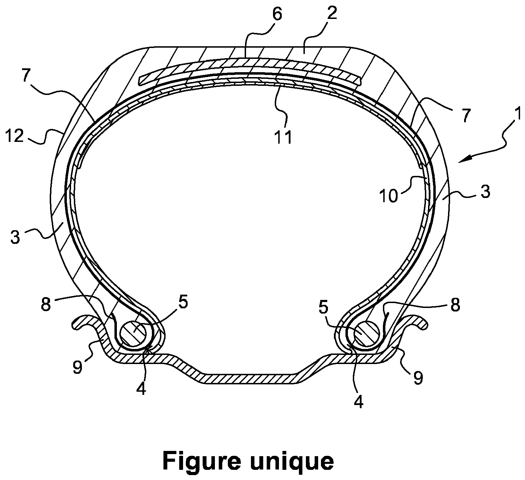

L'invention va maintenant être décrite à l'aide de la figure unique et des exemples de réalisation qui suivent, et qui sont donnés uniquement à titre d'illustration.
- la figure unique représente en coupe un pneumatique selon l'invention pourvu sur sa surface intérieure d'une couche de particules.

Comme on peut le voir sur cette figure, le pneumatique de référence générale 1 comporte un sommet 2 renforcé par deux armatures de sommet ou ceinture 6, deux flancs 3 et deux bourrelets 4, chacun de ces bourrelets 4 étant renforcé avec une tringle 5. Le sommet 2 est surmonté d'une bande de roulement (non représentée). Une armature de carcasse 7 est enroulée autour de deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits « radiaux », par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

La paroi interne du pneumatique 1 comprend une couche 10 de composition auto-obturante sur laquelle est disposée une couche 11 de particules de fibres de celluloses colorée. Dans le présent cas, les fibres sont colorées en jaune.

La couche 11 de particules, recouvrant la couche 10 de composition auto-obturante, recouvre de préférence la paroi intérieure correspondante au sommet 2 et aux épaules 12 du pneumatique.

Les fibres de celluloses appliquées sur la paroi intérieure du pneumatique présentent une dimension moyenne d'environ 2mm, et ont une forme géométrique quelconque.

La composition auto-obturante peut être une composition élastomère comportant au moins un élastomère diénique, une résine hydrocarbonée et un plastifiant liquide. Outre divers additifs éventuels, elle peut comporter, ou non, un agent de réticulation et /ou une faible fraction de charge renforçante. Cette composition auto-obturante est décrite dans la demande WO2011/092179A1.

La composition auto-obturante peut encore être une composition comprenant un coupage d'au moins deux élastomères solides, un élastomère polybutadiène ou copolymère de butadiène (composé A), un élastomère caoutchouc naturel ou polyisoprène de synthèse (composé B), le rapport pondéral A/B étant compris entre 10/90 et 90/10, une résine hydrocarbonée, avec éventuellement une charge comme décrit dans les demandes WO2011/092122 et WO2011/092123.

La composition auto-obturante peut encore être une composition comprenant un élastomère thermoplastique styrénique comme décrit dans le brevet FR2,917,996 ou encore un élastomère thermoplastique styrénique et une huile d'extension comme décrit dans la demande WO2008/080557.

La composition auto-obturante peut encore être un stratifié multicouche comprenant une première couche d'élastomère thermoplastique copolymère à blocs polystyrène et polyisobutylène, et une seconde couche élastomère à base d'élastomère thermoplastique styrénique, identique ou différent du premier. La première couche comprend éventuellement une huile d'extension, et la seconde comprend une huile d'extension comme décrit dans WO2008/154996.

La composition auto-obturante peut encore être une composition élastomère comprenant au moins un élastomère majoritaire, un élastomère thermoplastique styrénique, de l'huile d'extension et une résine hydrocarbonée comme décrit dans WO2009/059709.

La couche 11 de particules de fibres est appliquée sur la couche 10 par l'une des techniques de flocage connues. Parmi ces techniques, on peut utiliser le flocage par tamisage et battage, le flocage par projection sous pression, le flocage par voie électrostatique ou encore le flocage combinant la voie pneumatique et la voie électrostatique.

De préférence, la technique de flocage par projection sous pression est utilisée. Elle consiste à brasser les fibres de particules avec de l'air sous pression à l'aide d'un pistolet approprié, puis à projeter un mélange constitué d'air et de particules sur au moins une partie de la couche 10 de composition auto-obturante. Les particules sont dirigées par le courant d'air pour être projetées sur la surface collante, sur laquelle elles s'implantent.

Une autre technique d'application par flocage utilisée est la technique par voie électrostatique. Cette technique consiste à soumettre les particules à un champ électrique, créant ainsi une différence de potentiel élevée, de l'ordre de 10kV. Les particules chargées, viennent alors se piquer sur la surface de la couche 10 de composition auto-obturante.

Suivant l'importance de la force électrostatique appliquée, il est possible de communiquer aux particules de grandes accélérations, leur assurant un encastrement profond, et par conséquent un bon maintien, et une densité en surface importante.

Le traitement du pneumatique selon l'invention peut être utilisée dans tout type de pneumatique pour véhicule automobile, tels que du type deux roues, tourisme ou industriel, ou non automobile tel que vélo. Le pneumatique selon l'invention peut être utilisé pour des véhicules de tourisme susceptibles de rouler à très haute vitesse, ou pour des véhicules poids-lourds susceptibles de rouler et fonctionner sous des conditions de températures internes particulièrement élevées.

La couche de particules est de préférence disposée sur la paroi interne du pneumatique en la recouvrant partiellement ou en totalité. Mais cette couche peut être intégrée complètement à sa structure interne.

Le pneumatique selon l'invention a l'avantage de présenter, dans une très large gamme de températures d'utilisation, très peu de pénalisation notamment en terme de crevaison.

Des tests de crevaison dynamique et statique ont été effectués sur le pneumatique selon l'invention. Les résultats issus de ces tests sont rassemblés ci-après.

Crevaison dynamique avec pénétration de clou : on observe la crevaison de moins de 5% de pneumatique sur cette performance d'anticrevaison.

Crevaison dynamique avec pénétration de vis : on observe la crevaison d'environ 10% de pneumatique sur cette performance d'anticrevaison.

Crevaison statique sous une température de 0°C : on observe la crevaison de moins de 2% de pneumatique sur cette performance d'anticrevaison.

Crevaison statique sous une température de -10°C : on observe la crevaison d'environ 20% de pneumatique sur cette performance d'anticrevaison.

## Revendications

1. Procédé pour appliquer des particules (11) sur la paroi intérieure d'un pneumatique comportant deux flancs (3), un sommet (2) pourvu radialement extérieurement d'une bande de roulement, une structure de renfort de type carcasse (7), au moins une armature de sommet (6), la surface interne des flancs (3) et du sommet (2) formant une paroi intérieure, au moins une partie de ladite paroi intérieure étant recouverte d'au moins une couche (10) de composition auto-obturante, les particules (11) étant appliquées après la cuisson du pneumatique sur la couche de composition auto-obturante par une technique de flocage, **caractérisé en ce que** les particules (11) comprennent des broyats de pneumatiques usagés ou issus de rebut de fabrication.

2. Procédé selon la revendication 1, **caractérisé en ce que** la technique de flocage s'effectue par projection sous pression.

3. Procédé selon l'une des revendications précédentes, **caractérisé en ce que** la forme des particules est définie par le rapport L/E supérieur à 3, où L représente la longueur ou plus grande dimension de la particule et E représente l'épaisseur moyenne de la particule.

4. Procédé selon l'une des revendications précédentes, **caractérisé en ce que** les particules (11) ont un diamètre moyen compris entre 0,2 et 5mm.

5. Procédé selon l'une des revendications précédentes, **caractérisé en ce que** les particules (11) ont une forme géométrique quelconque.

6. Procédé selon l'une des revendications précédentes, **caractérisé en ce que** les particules (11) ont une couleur monochromatique ou polychromatique.

7. Procédé selon l'une des revendications précédentes, **caractérisé en ce que** les particules (11) comprennent des fibres choisies parmi les fibres synthétiques organiques, les fibres synthétiques minérales, les fibres synthétiques, les fibres naturelles ou leur combinaison.

8. Procédé selon l'une des revendications précédentes, **caractérisé en ce que** les particules (11) ont une épaisseur moyenne comprise entre 0,1 et 0,5mm.

9. Procédé selon l'une des revendications précédentes, **caractérisé en ce que** les particules recouvrent entre 60% et 95% de la paroi intérieure.

## Patentansprüche

1. Verfahren zum Aufbringen von Partikeln (11) auf die Innenwand eines Luftreifens, der zwei Flanken (3), einen Scheitel (2), der radial außen mit einem Laufstreifen versehen ist, eine Verstärkungsstruktur von der Art Karkasse (7), mindestens eine Scheitelbewehrung (6) aufweist, wobei die Innenfläche der Flanken (3) und des Scheitels (2) eine Innenwand bildet, wobei mindestens ein Teil der Innenwand von mindestens einer Schicht (10) mit selbstdichtender Zusammensetzung bedeckt ist, wobei die Partikel (11) nach dem Härten des Luftreifens durch eine Beflockungstechnik auf die Schicht mit selbstdichtender Zusammensetzung aufgebracht werden,
**dadurch gekennzeichnet, dass** die Partikel (11) Mahlgut von gebrauchten Luftreifen oder von Herstellungsabfällen stammend enthalten.

2. Verfahren nach Anspruch 1, **dadurch gekennzeichnet, dass** die Beflockungstechnik durch Druckspritzen erfolgt.

3. Verfahren nach einem der vorhergehenden Ansprüche, **dadurch gekennzeichnet, dass** die Form der Partikel durch das Verhältnis L/E größer als 3 definiert wird, wobei L die Länge oder größte Abmessung des Partikels und E die mittlere Dicke des Partikels darstellt.

4. Verfahren nach einem der vorhergehenden Ansprüche, **dadurch gekennzeichnet, dass** die Partikel (11) einen mittleren Durchmesser zwischen 0,2 und 5 mm haben.

5. Verfahren nach einem der vorhergehenden Ansprüche, **dadurch gekennzeichnet, dass** die Partikel (11) eine beliebige geometrische Form haben.

6. Verfahren nach einem der vorhergehenden Ansprüche, **dadurch gekennzeichnet, dass** die Partikel (11) eine monochrome oder polychrome Farbe haben.

7. Verfahren nach einem der vorhergehenden Ansprüche, **dadurch gekennzeichnet, dass** die Partikel (11) Fasern enthalten, die aus den organischen Kunstfasern, den mineralischen Kunstfasern, den Kunstfasern, den natürlichen Fasern oder ihrer Kombination ausgewählt werden.

8. Verfahren nach einem der vorhergehenden Ansprüche, **dadurch gekennzeichnet, dass** die Partikel (11) eine mittlere Dicke zwischen 0,1 und 0,5 mm haben.

9. Verfahren nach einem der vorhergehenden Ansprüche, **dadurch gekennzeichnet, dass** die Partikel zwischen 60% und 95% der Innenwand bedecken.

## Claims

1. Process for applying particles (11) to the inner wall of a tyre comprising two sidewalls (3), a crown (2) provided radially externally with a tread, a carcass-type reinforcing structure (7) and at least one crown reinforcement (6), the inner surface of the sidewalls (3) and of the crown (2) forming an inner wall, at least one portion of said inner wall being covered with at least one layer (10) of self-sealing composition, the particles (11) being applied after the curing of the tyre to the layer of self-sealing composition by a flocking technique, **characterized in that** the particles (11) comprise used tyre grindings or grindings derived from production scrap.

2. Process according to Claim 1, **characterized in that** the flocking technique is carried out by spraying under pressure.

3. Process according to either of the preceding claims, **characterized in that** the shape of the particles is defined by the ratio L/E of greater than 3, where L represents the length or largest dimension of the particle and E represents the mean thickness of the particle.

4. Process according to one of the preceding claims, **characterized in that** the particles (11) have a mean diameter of between 0.2 and 5 mm.

5. Process according to one of the preceding claims, **characterized in that** the particles (11) have any geometric shape.

6. Process according to one of the preceding claims, **characterized in that** the particles (11) have a monochromatic or polychromatic colour.

7. Process according to one of the preceding claims, **characterized in that** the particles (11) comprise fibres selected from organic synthetic fibres, mineral synthetic fibres, synthetic fibres or a combination thereof.

8. Process according to one of the preceding claims, **characterized in that** the particles (11) have a mean thickness of between 0.1 and 0.5 mm.

9. Process according to one of the preceding claims, **characterized in that** the particles cover between 60% and 95% of the inner wall.
